# FASCICULE DE BREVET EUROPEEN

(11) **EP 0 483 033 B1**
(45) Date de publication et mention de la délivrance du brevet: **26.01.1994**
(21) Numéro de dépôt: 91440083.3
(22) Date de dépôt: 21.10.1991
(51) Int. Cl.: A01B 9/00, A01B 15/16, A01B 33/10

(54) **Machine agricole de travail du sol comportant un rotor qui s'étend obliquement par rapport à la direction au travail**
Landwirtschaftliche Bodenbearbeitungsmaschine mit einem quer zur Arbeitsrichtung angeordneten Rotor
Agricultural soil-working machine with a rotor extending obliquely with regard to the direction at work

(30) Priorité: 22.10.1990 FR 9013213
(43) Date de publication de la demande: 29.04.1992
(73) Titulaire: KUHN S.A., F-67700 Saverne (FR)
(72) Inventeur: Kirch, M. Michel, F-57430 Sarralbe (FR)

(56) Documents cités:
- EP-A- 0 287 487
- FR-A- 2 577 103
- FR-A- 2 643 778
- US-A- 4 094 362

## Description

La présente invention concerne une machine agricole de travail du sol comportant un châssis qui supporte un rotor muni d'outils de travail du sol et tournant autour de son axe longitudinal qui s'étend obliquement par rapport à la direction d'avance au travail, de telle sorte que dans la partie frontale du rotor, les outils de travail du sol se déplacent vers le sol, lesdits outils de travail du sol comportant chacun un disque bombé, dont la concavité est dirigée vers l'extrémité du rotor la plus en avant, compte tenu du sens d'avance au travail, et une pluralité de bêches s'étendant au-delà du périmètre du disque et fixées audit disque de manière au moins sensiblement régulièrement espacée.

Une telle machine agricole de travail du sol est décrite dans la EP-A-0 287 487. Celle-ci comporte tout d'abord une structure d'attelage qui permet, pour l'utilisation, de l'atteler à un véhicule moteur. Elle comporte ensuite un châssis en forme de U ouvert vers le bas dans lequel est guidé en rotation un rotor de telle sorte que l'axe longitudinal de celui-ci s'étende au moins sensiblement horizontalement et obliquement par rapport à la direction d'avance au travail. Le rotor est équipé d'une pluralité d'outils de travail du sol dont chacun est formé par un disque circulaire bombé et une pluralité de bêches s'étendant au-delà du périmètre du disque et fixées audit disque de manière au moins sensiblement régulièrement espacée. Les différents disques sont agencés de telle manière que leur concavité soit dirigée vers l'extrémité du rotor la plus en avant durant le travail. La machine connue comporte par ailleurs des organes de transmission transmettant au rotor le mouvement reçu d'une source motrice. Le rotor est ainsi entraîné positivement en rotation autour de son axe longitudinal dans un sens tel que dans la partie frontale du rotor, les outils de travail du sol se déplacent vers le sol. La machine de travail du sol connue comporte enfin encore des versoirs collaborant avec la face concave des disques, ainsi que des roues de soutènement s'étendant devant le rotor et un soc de stabilisation latérale s'étendant derrière l'extrémité du rotor la plus en arrière durant le travail.

Dans cette machine connue, la fonction des bêches consiste à arracher successivement des mottes de terre et à imprimer à celles-ci un mouvement dirigé transversalement à la direction d'avance au travail. Les mottes sont ensuite reprises par la face concave des disques qui vont commencer à les retourner, leur retournement étant parachevé par les versoirs. Cette machine permet ainsi de réaliser un travail de labour.

Cette machine connue présente de nombreux avantages tant du point de vue agronomique qu'économique ou encore du confort d'utilisation.

En pratique, dans des conditions particulières, il s'est cependant avéré que les outils de travail du sol de cette machine connue avaient une certaine difficulté à pénétrer dans le sol et que leur entraînement en rotation nécessitait une puissance accrue.

Le but de la présente invention consiste à remédier à ce problème.

Celui-ci a été résolu en modifiant la forme du périmètre du disque, de telle sorte que, compte tenu du sens de rotation du rotor, ledit périmètre présente une échancrure devant chaque bêche.

Grâce à cette caractéristique, la partie du périmètre du disque s'étendant devant chaque bêche, ne s'oppose plus à la pénétration de l'outil de travail du sol dans le sol. Ceci entraîne du reste une diminution de la puissance absorbée, étant donné que les frottements du périmètre du disque sur le sol sont diminués.

Selon une caractéristique supplémentaire de l'invention, il est prévu que l'échancrure présente un premier bord qui s'étend au moins sensiblement dans le voisinage de l'arête frontale de la bêche correspondante.

Préférentiellement, il sera prévu que le premier bord de l'échancrure soit au moins sensiblement la continuité de l'arête frontale de la bêche correspondante.

Selon une caractéristique supplémentaire de l'invention, il est prévu que l'échancrure présente un deuxième bord qui s'étend à partir du voisinage de la partie intérieure du premier bord vers l'avant, compte tenu du sens de rotation du rotor, jusqu'au niveau du bord extérieur du périmètre du disque.

Avantageusement le deuxième bord de l'échancrure atteint le bord extérieur du périmètre du disque entre la bêche correspondante et la bêche précédente.

Préférentiellement, il sera prévu que le deuxième bord de l'échancrure atteint le bord extérieur du périmètre du disque au moins sensiblement à mi-distance entre l'arête frontale de la bêche correspondante et l'arête frontale de la bêche précédente.

Selon une autre caractéristique supplémentaire de l'invention, il est prévu que le deuxième bord de l'échancrure soit au moins sensiblement droit.

Avantageusement, il sera prévu que le deuxième bord de l'échancrure forme avec une radiale au disque passant dans la zone de raccordement du premier bord de l'échancrure avec le bord extérieur du périmètre du disque, un angle au moins sensiblement droit.

Selon une autre caractéristique de l'invention, il est prévu que dans sa partie intérieure, le premier bord de l'échancrure présente un congé qui le raccorde au deuxième bord de l'échancrure. Avantageusement, ce congé sera arrondi.

D'autres caractéristiques de l'invention sont contenues dans les autres sous-revendications et apparaîtront dans la description ci-dessous d'un exemple de réalisation non limitatif d'une machine selon l'invention. Cette description fait référence au dessin annexé sur lequel,
- la figure 1 représente, en vue de dessus, un exemple de réalisation d'une machine selon l'invention attelée à un véhicule tracteur,
- la figure 2 représente, vue en perspective trois quarts avant, l'extrémité de la machine de la figure 1 s'étendant la plus en arrière au travail, et
- la figure 3 représente, à une échelle agrandie, un outil de travail du sol équipant le rotor de la machine des figures 1 et 2.

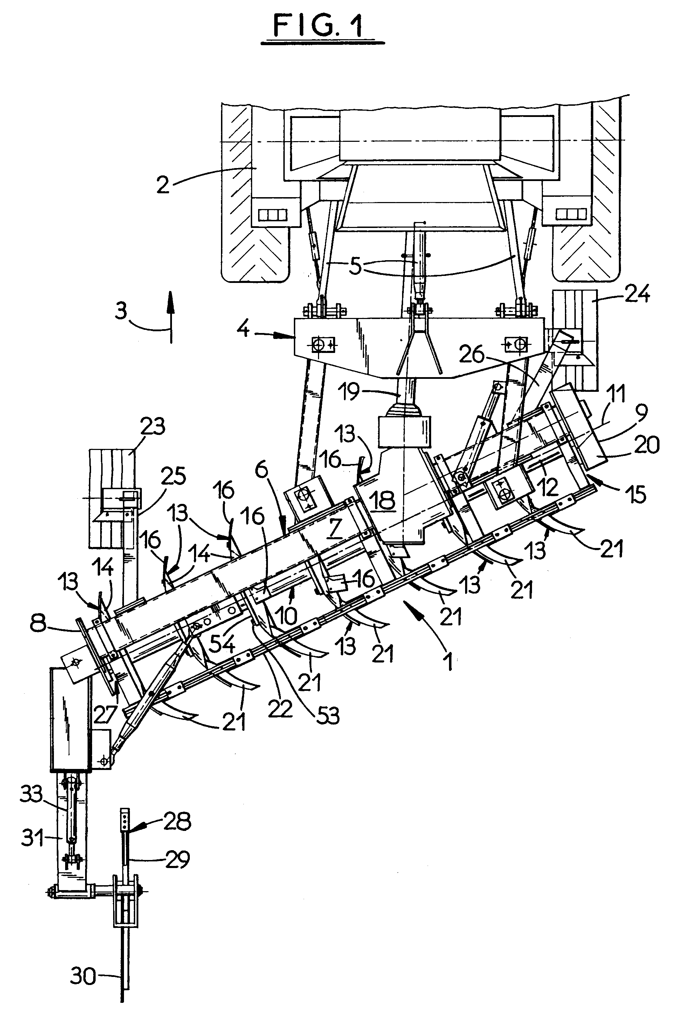

Sur la figure 1 est représentée une machine agricole de travail du sol (1) selon l'invention attelée à un véhicule tracteur (2) qui, au travail, tire celle-ci dans la direction et le sens d'avance (3).

A cet effet, la machine (1) est munie d'une structure d'attelage (4) à trois points de fixation permettant de l'atteler au dispositif de relevage hydraulique (5) du véhicule tracteur (2).

A l'arrière, la structure d'attelage (4) est liée au châssis (6) de la machine (1). Ce châssis (6) se compose d'une traverse supérieure (7) et de deux parois latérales (8, 9), une à chaque extrémité de ladite traverse supérieure (7). Lesdites parois latérales (8, 9) s'étendent, à partir de la traverse supérieure (7), vers le bas, de telle sorte que le châssis (6) présente la forme d'un U ouvert vers le bas.

Entre les extrémités inférieures des parois latérales (8, 9) s'étend un rotor (10) qui est guidé en rotation dans lesdites parois latérales (8, 9). Ce rotor (10) présente un axe longitudinal (11) au moins sensiblement horizontal et s'étendant obliquement par rapport à la direction d'avance (3) au travail.

Le rotor (10) comporte une poutre centrale (12) sur laquelle sont fixés des outils de travail du sol (13). Chaque outil de travail du sol (13) comporte un disque bombé (14) dont la concavité est dirigée vers l'extrémité (15) du rotor (10) la plus en avant au travail. Chaque outil de travail du sol (13) comporte également une pluralité de bêches (16) fixées de manière amovible sur la face convexe dudit disque (14). Ces outils de travail du sol (13) seront décrits ultérieurement plus en détail.

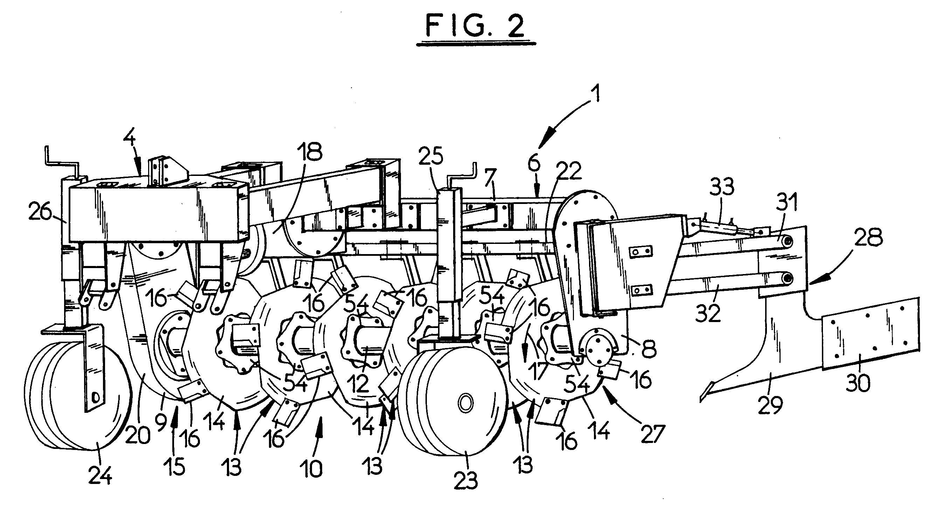

Pendant le travail, le rotor (10) est entraîné positivement en rotation autour de son axe longitudinal (11), dans un sens de rotation (17) (figure 2) tel qu'à la partie frontale du rotor (10), les outils de travail du sol (13) se déplacent vers le bas, en direction du sol à travailler. A cet effet, la traverse supérieure (7) du châssis (6) est munie d'un carter de renvoi (18) qui est constitué sous forme de boîte de vitesses. Ce carter de renvoi (18) reçoit le mouvement de l'arbre de prise de force (non représenté) du véhicule tracteur (2) par l'intermédiaire d'un arbre de transmission télescopique à joints universels (19). Le carter de renvoi (18) est par ailleurs lié en rotation à un carter latéral (20), agencé à l'extrémité de la traverse supérieure (7) s'étendant la plus en avant lors du travail. Cette liaison en rotation entre le carter de renvoi (18) et le carter latéral (20) est réalisée au moyen d'un arbre de transmission (non représenté) logé d'une manière connue dans la traverse supérieure (7). Ce carter latéral (20) forme d'ailleurs la paroi latérale (9) prévue à cette extrémité de la traverse supérieure (7). Ce carter latéral (20) transmet le mouvement au rotor (10) d'une manière également connue de l'homme de l'art.

La machine comporte par ailleurs des versoirs (21) s'étendant, compte tenu du sens d'avance (3) au travail, derrière la poutre centrale (12) du rotor (10). Chaque versoir (21) collabore avec la face concave d'un disque (14) en vue du retournement des mottes de terre arrachées par les bêches (16) et véhiculées par le disque (14). L'ensemble des versoirs (21) est fixé sur une poutre support (22), de telle manière que la position de chaque versoir (21) par rapport au disque (14) correspondant puisse être réglée de manière précise. La poutre support (22), quant à elle, est montée de préférence de manière facilement amovible sur le châssis (6).

Devant le rotor (10), sont prévues deux roues de soutènement (23, 24) destinées à rouler sur le sol pendant le travail, de sorte à déterminer la profondeur de travail du rotor (10). Chaque roue de soutènement (23, 24) est agencée devant l'une correspondante des extrémités du châssis (6) et est liée à ce dernier au moyen d'une structure support (25, 26) permettant notamment, d'une manière connue, de régler la position en hauteur de la roue de soutènement (23, 24) correspondante par rapport au châssis (6).

A l'arrière du rotor (10), derrière l'extrémité (27) de celui-ci la plus en arrière durant le travail, est prévu un organe de stabilisation latérale (28). Cet organe de stabilisation (28) comporte notamment un soc (29) destiné à s'engager dans le sol durant le travail, sensiblement dans la raie dégagée par l'outil de travail du sol (13) extrême agencé à cette extrémité (27) du rotor (10). Sur la figure 2, on voit également qu'à l'arrière, le soc (29) est en sus muni d'une plaque d'appui (30).

Cet organe de stabilisation latérale (28) est lié au châssis (6) de la machine (1). Cette liaison apparaît plus précisément sur la figure 2. Elle comporte notamment deux bielles (31, 32) formant avec le châssis (6), respectivement l'organe de stabilisation latérale (28), un parallélogramme déformable. Sur ce parallélogramme déformable agit un vérin hydraulique (33) à double effet destiné à déformer le parallélogramme déformable en vue du réglage de la position en hauteur de l'organe de stabilisation latérale (28) par rapport au châssis (6).

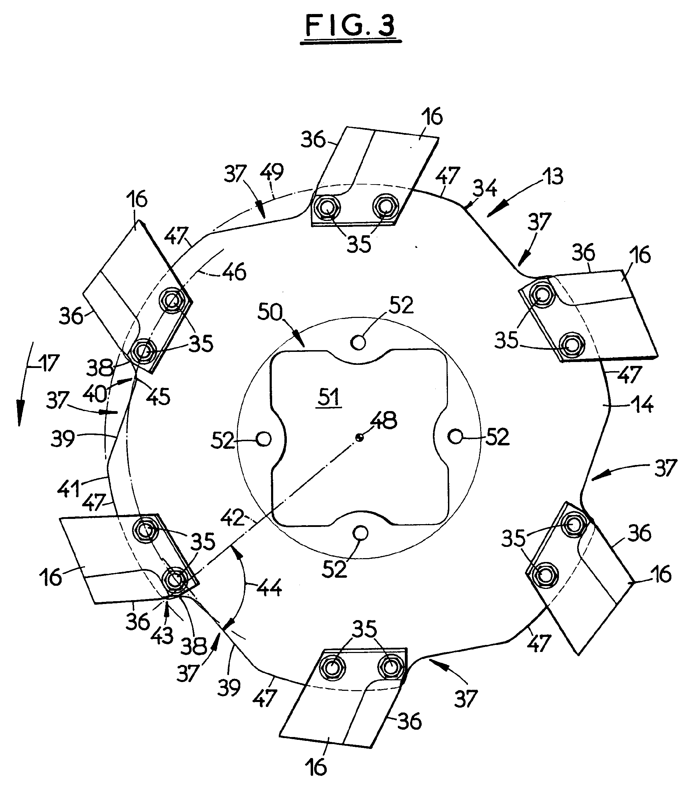

Comme dit plus haut, le rotor (10) est notamment composé d'une pluralité d'outils de travail du sol (13), comportant chacun un disque bombé (14) et une pluralité de bêches (16). Un tel outil de travail du sol (13) est représenté en détail sur la figure 3.

Sur chaque disque (14) sont fixées des bêches (16), de sorte à s'étendre au-delà du périmètre (34) du disque (14). Du reste, ces bêches (16) sont agencées de telle manière sur le disque (14) qu'elles soient au moins sensiblement régulièrement espacées les unes des autres. Chaque bêche (16) est fixée sur la face convexe du disque (14). Ceci laisse la face concave de ce dernier libre pour permettre à ladite face concave de collaborer avec le versoir (21) correspondant. Cette fixation est réalisée au moyen de deux boulons (35) pour permettre un remplacement de la bêche (16) lorsque celle-ci est usée.

Chaque bêche (16) présente, compte tenu du sens de rotation (17) du rotor (10) au travail, une arête frontale (36) avantageusement biseautée. En sus, cette arête frontale (36) s'étend obliquement vers l'arrière à partir du périmètre (34) du disque (14).

Tel que visible sur la figure 3, le périmètre (34) du disque (14) présente, compte tenu du sens de rotation (17) du rotor (10) au travail, devant chaque bêche (16) une échancrure (37). Cette échancrure (37) présente un premier bord (38) qui s'étend dans le voisinage de l'arête frontale (36) de la bêche (16) correspondante. En sus, ce premier bord (38) est au moins sensiblement la continuité de l'arête frontale (36) de la bêche (16) correspondante.

L'échancrure (37) présente ensuite un deuxième bord (39) qui s'étend, à partir du voisinage de la partie intérieure (40) du premier bord (38) vers l'avant, compte tenu du sens de rotation (17) du rotor (10) au travail, jusqu'au niveau du bord extérieur (41) du périmètre (34) du disque (14). Le deuxième bord (39) atteint d'ailleurs le bord extérieur (41) du périmètre (34) du disque (14) entre la bêche (16) correspondante et la bêche (16) précédente, au moins sensiblement à mi-distance entre l'arête frontale (36) de ladite bêche (16) correspondante et l'arête frontale (36) de ladite bêche (16) précédente.

Sur la figure 3, il apparaît également que le deuxième bord (39) de l'échancrure (37) est au moins sensiblement droit. Du reste, il forme avec une radiale (42) au disque (14) passant dans la zone de raccordement (43) du premier bord (38) et du bord extérieur (41) du périmètre (34) du disque (14), un angle (44) au moins sensiblement droit.

Dans sa partie intérieure (40), le premier bord (38) présente un congé (45) arrondi qui le raccorde au deuxième bord (39). Ce congé de raccord (45) détermine la partie la plus profonde de l'échancrure (37), laquelle se situe au moins sensiblement au niveau du diamètre (46) sur lequel sont prévus les trous de passage (non représentés) des boulons (35) fixant les bêches (16) au disque (14).

Chaque portion (47) du bord extérieur (41) du périmètre (34) du disque (14), qui s'étend entre deux échancrures (37) consécutives, présente une forme de portion de cercle au moins sensiblement centré sur le centre (48) du disque (14) qui coïncide avec l'axe de rotation (11) du rotor (10). Ici, l'ensemble de ces portions (47) du bord extérieur (41) du périmètre (34) du disque (14) sont d'ailleurs agencées sur un même cercle (49) centré sur le centre (48) du disque (14).

Dans sa partie médiane (50), le disque (14) présente une ouverture (51) permettant de le glisser sur la poutre centrale (12) du rotor (10). Autour de l'ouverture (51) sont prévus des trous de passage (52) pour des boulons (53) destinés à fixer de manière amovible le disque (14) sur l'un correspondant des flasques (54) dont est munie la poutre centrale (12) du rotor (10).

Différentes modifications ou améliorations peuvent être apportées à l'exemple de réalisation qui vient d'être décrit sans qu'on ne sorte pour autant du cadre de la présente invention tel que défini dans les revendications suivantes.

## Revendications

1. Machine agricole de travail du sol (1) comportant un châssis (6) qui supporte un rotor (10) muni d'outils de travail du sol (13) et tournant autour de son axe longitudinal (11) qui s'étend obliquement par rapport à la direction d'avance (3) au travail, de telle sorte que dans la partie frontale du rotor (10), les outils de travail du sol (13) se déplacent vers le sol, lesdits outils de travail du sol (13) comportant chacun un disque bombé (14) dont la concavité est dirigée vers l'extrémité (15) du rotor (10) la plus en avant, compte tenu du sens d'avance (3) au travail, et une pluralité de bêches (16) s'étendant au-delà du périmètre (34) du disque (14) et fixées audit disque (14) de manière régulièrement espacée, caractérisée par le fait que, compte tenu du sens de rotation (17) du rotor (10), le périmètre (34) du disque (14) présente une échancrure (37) devant chaque bêche (16).

2. Machine agricole de travail du sol selon la revendication 1, caractérisée par le fait que l'échancrure (37) présente un premier bord (38) qui s'étend dans le voisinage de l'arête frontale (36) de la bêche (16) correspondante.

3. Machine agricole de travail du sol selon la revendication 2, caractérisée par le fait que le premier bord (38) de l'échancrure (37) est la continuité de l'arête frontale (36) de la bêche (16) correspondante.

4. Machine agricole de travail du sol selon la revendication 2 ou 3, caractérisée par le fait que l'échancrure (37) présente un deuxième bord (39) qui s'étend à partir du voisinage de la partie intérieure (40) du premier bord (38) vers l'avant, compte tenu du sens de rotation (17) du rotor (10), jusqu'au niveau du bord extérieur (41) du périmètre (34) du disque (14).

5. Machine agricole de travail du sol selon la revendication 4, caractérisée par le fait que le deuxième bord (39) de l'échancrure (37) atteint le bord extérieur (41) du périmètre (34) du disque (14) entre la bêche (16) correspondante et la bêche (16) précédente.

6. Machine agricole de travail du sol selon la revendication 5, caractérisée par le fait que le deuxième bord (39) de l'échancrure (37) atteint le bord extérieur (41) du périmètre (34) du disque (14) à mi-distance entre l'arête frontale (36) de la bêche (16) correspondante et l'arête frontale (36) de la bêche (16) précédente.

7. Machine agricole de travail du sol selon l'une au moins des revendications 4 à 6, caractérisée par le fait que le deuxième bord (39) de l'échancrure (37) est droit.

8. Machine agricole de travail du sol selon la revendication 7, caractérisée par le fait que le deuxième bord (39) de l'échancrure (37) forme avec une radiale (42) au disque (14) passant dans la zone de raccordement (43) du premier bord (38) de l'échancrure (37) et du bord extérieur (41) du périmètre (34) du disque (14), un angle (44) droit.

9. Machine agricole de travail du sol selon l'une au moins des revendications 4 à 8, caractérisée par le fait que dans sa partie intérieure (40), le premier bord (38) de l'échancrure (37) présente un congé (45) qui le raccorde au deuxième bord (39) de l'échancrure (37).

10. Machine agricole de travail du sol selon la revendication 9, caractérisée par le fait que le congé (45) est arrondi.

11. Machine agricole de travail du sol selon l'une au moins des revendications 1 à 10, caractérisée par le fait que dans sa partie la plus profonde, l'échancrure (37) s'étend au niveau du diamètre (46) sur lequel sont prévus les trous de passage des boulons (35) fixant les bêches (16) au disque (14).

12. Machine agricole de travail du sol selon l'une au moins des revendications 1 à 11, caractérisée par le fait que la portion (47) du bord extérieur (41) du périmètre (34) du disque (14), s'étendant entre deux échancrures (37) consécutives, présente une forme de portion de cercle centré sur l'axe de rotation (11) du rotor (10).

13. Machine agricole de travail du sol selon la revendication 12, caractérisée par le fait que l'ensemble des portions (47) du bord extérieur (41) du périmètre (34) du disque (14) sont agencées sur un même cercle (49) centré sur l'axe de rotation (11) du rotor (10).

14. Machine agricole de travail du sol selon l'une au moins des revendications 1 à 13, caractérisée par le fait que l'arête frontale (36) d'une bêche (16) s'étend, compte tenu du sens de rotation (17) du rotor (10), obliquement vers l'arrière à partir du périmètre (34) du disque (14).

15. Machine agricole de travail du sol selon l'une au moins des revendications 1 à 14, caractérisée par le fait que des organes de transmission (18, 19, 20) transmettent au rotor (10) le mouvement reçu d'une source motrice (2).

## Patentansprüche

1. Landwirtschaftliche Maschine zur Bodenbearbeitung (1), die einen Rahmen (6) aufweist, welcher einen Rotor (10) trägt, der mit Bodenbearbeitungswerkzeugen (13) versehen ist und um seine sich schräg zur Fahrtrichtung (3) bei der Arbeit erstreckenden Längsachse (11) derart dreht, dass an der Frontseite des Rotors (10) die Bodenbearbeitungswerkzeuge (13) sich zum Boden hin bewegen, wobei die Bodenbearbeitungswerkzeuge (13) jeweils eine gewölbte Scheibe (14) deren Konkavität, bezogen auf die Fahrtrichtung (3) während der Arbeit, zum vordersten Ende (15) des Rotors (10) gerichtet ist, und jeweils eine sich jenseits des Umfangs (34) der Scheibe (14) erstreckende und in regelmässigen Abständen auf der Scheibe (14) befestigte Mehrzahl von Spaten (16) aufweisen, dadurch gekennzeichnet, dass, in Umdrehrichtung (17) des Rotors (10) gesehen, der Umfang (34) der Scheibe (14) vor jedem Spaten (16) einen Ausschnitt (37) aufweist.

2. Landwirtschaftliche Bodenbearbeitungsmaschine nach Anspruch 1, dadurch gekennzeichnet, dass der Ausschnitt (37) einen ersten Rand (38) aufweist, der sich in der Nähe der Frontkante (36) des entsprechenden Spatens (16) erstreckt.

3. Landwirtschaftliche Bodenbearbeitungsmaschine nach Anspruch 2, dadurch gekennzeichnet, dass der erste Rand (38) des Ausschnittes (37) die Fortsetzung der Frontkante (36) des entsprechenden Spatens (16) bildet.

4. Landwirtschaftliche Bodenbearbeitungsmaschine nach Anspruch 2 oder 3, dadurch gekennzeichnet, dass der Ausschnitt (37) einen zweiten Rand (39) aufweist, welcher sich aus der Nähe des inneren Teils (40) des ersten Randes (38) in Umdrehrichtung (17) des Rotors (10) gesehen, nach vorne bis auf Höhe des äusseren Randes (41) des Umfangs (34) der Scheibe (14) hin erstreckt.

5. Landwirtschaftliche Bodenbearbeitungsmaschine nach Anspruch 4, dadurch gekennzeichnet, dass der zweite Rand (39) des Ausschnittes (37) den äusseren Rand (41) des Umfangs (34) der Scheibe (14) zwischen dem entsprechenden Spaten (16) und dem zuvorstehenden Spaten (16) erreicht.

6. Landwirtschaftliche Bodenbearbeitungsmaschine nach Anpruch 5, dadurch gekennzeichnet, dass der zweite Rand (39) des Auschnittes (37) den äusseren Rand (41) des Umfangs (34) der Scheibe (14) halbwegs zwischen der Frontkante (36) des entsprechenden Spatens (16) und der Frontkante (36) des zuvorstehenden Spatens (16) erreicht.

7. Landwirtschaftliche Bodenbearbeitungsmaschine nach zumindest einem der Ansprüche 4 bis 6, dadurch gekennzeichnet, dass der zweite Rand (39) des Ausschnittes (37) gerade ist.

8. Landwirtschaftliche Bodenbearbeitungsmaschine nach Anspruch 7, dadurch gekennzeichnet, dass der zweite Rand (39) des Ausschnittes (37) mit einer zu der Scheibe (14) radial verlaufenden Linie (42), welche sich durch den Verbindungsbereich (43) zwischen dem ersten Rand (38) des Ausschnittes (37) und dem äusseren Rand (41) des Umfangs (34) der Scheibe (14) erstreckt, einen Rechtwinkel (44) bildet.

9. Landwirtschaftliche Bodenbearbeitungsmaschine nach zumindest einem der Ansprüche 4 bis 8, dadurch gekennzeichnet, dass in seinem inneren Teil (40) der erste Rand (38) des Ausschnittes (37) eine Hohlkehle (45) aufweist, welche ihn mit dem zweiten Rand (39) des Ausschnittes (37) verbindet.

10. Landwirtschaftliche Bodenbearbeitungsmaschine nach Anspruch 9, dadurch gekennzeichnet, dass die Hohlkehle (45) rund ist.

11. Landwirtschaftliche Bodenbearbeitungsmaschine nach zumindest einem der Ansprüche 1 bis 10, dadurch gekennzeichnet, dass der Ausschnitt (37) sich an seiner tiefsten Stelle in Höhe des Durchmessers (46) erstreckt, auf welchem die Durchgangslöcher der Bolzen (35), die die Spaten (16) an der Scheibe (14) befestigen, vorgesehen sind.

12. Lanwirtschaftliche Bodenbearbeitungsmaschine nach zumindest einem der Ansprüche 1 bis 11, dadurch gekennzeichnet, dass der Abschnitt (47) des äusseren Randes (41) des Umfangs (34) der Scheibe (14), welcher sich zwischen zwei aufeinander folgenden Ausschnitten (37) erstreckt, die Form eines auf der Rotationsachse (11) des Rotors (10) zentrierten Kreisabschnittes aufweist.

13. Landwirtschaftliche Bodenbearbeitungsmaschine nach Anspruch 12, dadurch gekennzeichnet, dass sämtliche Abschnitte (47) des äusseren Randes (41) des Umfangs (34) der Scheibe (14) auf einem gleichen auf der Rotationsachse (11) des Rotors (10) zentrierten Kreis (49) angebracht sind.

14. Landwirtschaftliche Bodenbearbeitungsmaschine nach zumindest einem der Ansprüche 1 bis 13, dadurch gekennzeichnet, dass die Frontkante (36) eines Spatens (16) sich, in Umdrehrichtung (17) des Rotors (10) gesehen, von dem Umfang (34) der Scheibe (14) aus schräg nach hinten erstreckt.

15. Landwirtschaftliche Bodenbearbeitungsmaschine nach zumindest einem der Ansprüche 1 bis 14, dadurch gekennzeichnet, dass Übertragungsorgane (18, 19, 20) dem Rotor (10) die von einer Antriebsquelle (2) erhaltene Bewegung übermitteln.

## Claims

1. Agricultural soil working machine (1) comprising a frame (6) which supports a rotor (10) equiped with soil working tools (13) and rotating around its longitudinal axis (11) which extends obliquely in relation to the direction of advance (3) at work, in such a way that at the front part of the rotor (10), the soil working tools (13) move towards the soil, said soil working tools (13) each comprising a curved disc (14), the concavity of which is directed to the foremost end (15) of the rotor (10), taking into account the direction of advance (3) at work, and a plurality of spades (16) extending beyond the perimeter (34) of the disc (14) and fastened to said disc (14) in a regularly spaced manner, characterised in that, taking into account the direction of rotation (17) of the rotor (10), the perimeter (34) of the disc (14) has a notch (37) in front of each spade (16).

2. Agricultural soil working machine according to claim 1, characterised in that the notch (37) has a first edge (38) which extends in the vicinity of the front edge (36) of the corresponding spade (16).

3. Agricultural soil working machine according to claim 2, characterised in that the first edge (38) of the notch (37) continues the front edge (36) of the corresponding spade (16).

4. Agricultural soil working machine according to claim 2 or 3, characterised in that the notch (37) has a second edge (39) which extends from the vicinity of the inner part (40) of the first edge (38) towards the front, taking into account the direction of rotation (17) of the rotor (10), up to the level of the outer edge (41) of the perimeter (34) of the disc (14).

5. Agricultural soil working machine according to claim 4, characterised in that the second edge (39) of the notch (37) reaches the outer edge (41) of the perimeter (34) of the disc (14) between the corresponding spade (16) and the preceding spade (16).

6. Agricultural soil working machine according to claim 5, characterised in that the second edge (39) of the notch (37) reaches the outer edge (41) of the perimeter (34) of the disc (14) at half distance between the front edge (36) of the corresponding spade (16) and the front edge (36) of the preceding spade (16).

7. Agricultural soil working machine according to one at least of claims 4 to 6, characterised in that the second edge (39) of the notch (37) is straight.

8. Agricultural soil working machine according to claim 7, characterised in that the second edge (39) of the notch (37) forms a right angle (44) with a line (42) which is radial to the disc (14) and passes through the connecting zone (43) of the first edge (38) of the notch (37) and the outer edge (41) of the perimeter (34) of the disc (14).

9. Agricultural soil working machine according to one at least of the claims 4 to 8, characterised in that in its inner part (40), the first edge (38) of the notch (37) has a hollow curvature (45) which connects it to the second edge (39) of the notch (37).

10. Agricultural soil working machine according to claim 9, characterised in that the hollow curvature (45) is rounded.

11. Agricultural soil working machine according to one at least of claims 1 to 10, characterised in that in its deepest part, the notch (37) extends at the level of the diameter (46) on which the clearance-holes for the bolts (35) fastening the spades (16) to the disc (14) are provided.

12. Agricultural soil working machine according to one at least of claims 1 to 11, characterised in that the portion (47) of the outer edge (41) of the perimeter (34) of the disc (14), extending between two following notches (37), has the shape of a portion of a cercle centered on the axis of rotation (11) of the rotor (10).

13. Agricultural soil working machine according to claim 12, characterised in that all the portions (47) of the outer edge (41) of the perimeter (34) of the disc (14) are arranged on one and the same cercle (49) centered on the axis of rotation (11) of the rotor (10).

14. Agricultural soil working machine according to one at least of claims 1 to 13, characterised in that the front edge (36) of a spade (16) extends, taking into account the direction of rotation (17) of the rotor (10), obliquely rearwards from the perimeter (34) of the disc (14).

15. Agricultural soil working machine according to one at least of claims 1 to 14, characterised in that transmission elements (18, 19, 20) transmit to the rotor (10) the movement received from a power source (2).
